# EUROPÄISCHE PATENTSCHRIFT

(11) **EP 3 259 562 B1**
(45) Veröffentlichungstag und Bekanntmachung des Hinweises auf die Patenterteilung: **26.06.2019**
(21) Anmeldenummer: 16721405.5
(22) Anmeldetag: 03.05.2016
(51) Int. Cl.: G01D 11/24, H01B 7/18, H01R 13/52

(54) **VORRICHTUNG ZUM VERBINDEN EINES SCHUTZÜBERZUGES FÜR EIN SENSORKABEL MIT EINEM SENSORGEHÄUSE**
DEVICE FOR CONNECTING A PROTECTIVE COVER FOR A SENSOR CABLE TO A SENSOR HOUSING
DISPOSITIF POUR RELIER UNE GAINE DE PROTECTION D'UN CÂBLE DE DÉTECTEUR À UN BOÎTIER DE DÉTECTEUR

(30) Priorität: 21.05.2015 AT 504122015
(43) Veröffentlichungstag der Anmeldung: 27.12.2017
(73) Patentinhaber: Siemens AG Österreich, 1210 Wien (AT)
(72) Erfinder: BRANDWEINER, Gregor, 8010 Graz (AT); KOLLER, Andreas, 8733 Sankt Marein bei Knittelfeld (AT)
(74) Vertreter: Maier, Daniel Oliver
(86) Internationale Anmeldenummer: PCT/EP2016/059893
(87) Internationale Veröffentlichungsnummer: WO 2016/184680

(56) Entgegenhaltungen:
- DE-A1-102010 039 055
- DE-U1-202010 011 349
- US-A1- 2009 146 655

## Beschreibung

### GEBIET DER ERFINDUNG

Die Erfindung betrifft eine Vorrichtung zum Verbinden eines Schutzüberzuges für ein Sensorkabel mit einem Sensorgehäuse, umfassend ein Sensorgehäuse mit einer Kabelöffnung für ein Sensorkabel, sowie einen Schutzüberzug, der das Sensorkabel im Betriebszustand des Sensors lose umgibt.

Sensorkabel enthalten elektrisch leitende Verbindungen, über die elektrische Signale von einem Sensor weg geleitet werden können. Dabei weisen Sensorkabel in der Regel eine elektrische Isolierung der leitenden Verbindungen auf, wobei die elektrische Isolierung Bestandteil des Sensorkabels und mit diesem fest verbunden ist.

Die gegenständliche Erfindung betrifft solche Schutzüberzüge, die das Sensorkabel lose umgeben, also nicht fest mit dem Sensorkabel verbunden sind, sodass der Schutzüberzug grundsätzlich längs des Sensorkabels verschieblich ist.

### STAND DER TECHNIK

Sensorkabel müssen beim Einsatz unter schwierigen Umweltbedingungen, wie bei Vereisung, Steinschlag oder Staubentwicklung, zusätzlich mechanisch geschützt werden. Solche schwierigen Umweltbedingungen liegen etwa im Außenbereich eines Schienenfahrzeuges vor, wenn ein Sensor an der Radachse, am Fahrwerksrahmen, oder auch außen am Wagenkasten angebracht ist, wie dies bei Beschleunigungs- oder Kraftsensoren der Fall ist.

Die Sensorkabel müssen dann zusätzlich mit Schutzüberzügen, insbesondere Schutzschläuchen, umgeben und so geschützt werden. Die Anbindung des Schutzüberzuges an das Sensorkabel oder den Sensorkörper, also das Sensorgehäuse, war bisher nur mittels unvorteilhafter Ausführungen üblich. So wurde der Schutzüberzug etwa mittels eines Schrumpfschlauches am Sensorkabel selbst oder zusätzlich auch an einem Teil des Sensorgehäuses befestigt. Oder der Schutzüberzug wurde mittels Schlauchschellen am Sensorkabel befestigt, was aufgrund der Verformbarkeit des Sensorkabels kaum zu einer dauerhaft festen und dichten Verbindung führt. Oder es wurden komplexe und aufwändige Sonderkonstruktionen hergestellt, mit einem starren Rohr und einem am Rohr angebrachte Flansch, wo das Rohr am Sensorgehäuse angebracht und der Schutzüberzug am Flansch des Rohres befestigt war.

Aus dem Stand der Technik ist beispielsweise die DE 20 2010 011 349 U1 bekannt, in welcher ein elektrischer Anschluss für einen Sensor, der beispielsweise als Thermoelement ausgebildet sein kann, offenbart ist. Der Sensor ist von einem Schutzgehäuse ummantelt. Teil des Sensors ist ein metallisches Rohr. In dem Rohr verlaufende Leitungen sind mit einem Kabel verbunden, welches durch eine erste Buchse und eine zweite Buchse hindurch geführt ist. Im Bereich zwischen dem Rohr und der ersten Buchse, welche einen größeren Abstand von dem Rohr aufweist als die zweite Buchse, ist das Kabel von einem mit dem Rohr und der ersten Buchse sowie der zweiten Buchse verbundenen Hohlkörper ummantelt.

Weiterhin zeigt die DE 10 2010 039 055 A1 eine Wegmessvorrichtung mit einem Sensor und einem Messstreckenhalter mit Ausnehmungen, in welchen von Schläuchen ummantelte Messstrecken vorgesehen sind.

In der US 2009/0146655 A1 ist ein Wirbelstrommessgerät mit einem Entfernungssensor beschrieben, welcher in einem Sensorgehäuse vorgesehen ist. Aus dem Sensorgehäuse ist ein Kabel geführt, welches von einem Schutzüberzug ummantelt ist. Der Schutzüberzug weist ein Formstück auf, welches mit einem Endstück des Sensorgehäuses, das ein Außengewinde umfasst, verschraubt ist.

Ferner offenbart die WO 2014/103499 A1 einen Drehzahlgeber mit einem Kabel, welches aus einem Gehäuse geführt und von einer wasserdichten Hülse umgeben ist. Die Hülse weist einen Schutzmantel auf, welcher mit einer Innenkontur des Gehäuses verbunden ist. Um den Schutzmantel ist eine mit einer Außenkontur des Gehäuses verbundene Abdeckung vorgesehen.

### DARSTELLUNG DER ERFINDUNG

Es ist daher eine Aufgabe der Erfindung, eine dauerhafte und auch dauerhaft dichte Verbindung zwischen Sensorgehäuse und Schutzüberzug herzustellen.

Diese Aufgabe wird durch eine Vorrichtung nach Anspruch 1 gelöst, indem das Sensorgehäuse einen die Kabelöffnung umgebenden Flansch aufweist und ein dem Sensorgehäuse zugewandtes Ende des Schutzüberzuges formschlüssig mit einem starren hülsenförmigen Anschlussteil verbunden ist, welcher Anschlussteil formschlüssig und lösbar mit dem Flansch des Sensorgehäuses verbindbar ist.

Auf diese Weise ist eine dichte Anbindung einerseits des Schutzüberzuges am Anschlussteil und andererseits des Anschlussteils am starren Sensorgehäuse sichergestellt. Es können dann bei Verwendung von Standardkomponenten für den Schutzüberzug entsprechende Standardkomponenten für den Anschlussteil, sogenannte Adapter, verwendet werden sowie eine entsprechende Standardverbindung zwischen Flansch des Sensorgehäuses und Anschlussteil.

Hülsenförmig heißt, dass der Anschlussteil im Wesentlichen die Form eines Zylindermantels hat. Damit kann ein Schutzüberzug mit kreisförmigem Querschnitt einfach an einem Ende des Anschlussteils formschlüssig auf den Anschlussteil aufgeschoben oder formschlüssig in den Anschlussteil hineingesteckt werden. Das andere Ende des Anschlussteils kann dann formschlüssig außen am Flansch des Sensorgehäuses, oder auch innen im Flansch des Sensorgehäuses befestigt werden.

Durch die Starrheit des Anschlussteils ist sichergestellt, dass der Schutzüberzug dicht am Anschlussteil befestigt werden kann, sowie, dass der Anschlussteil am Flansch des Sensorgehäuses dicht befestigt werden kann.

Der Flansch des Sensorgehäuses wird in der Regel nur so weit vom restlichen Sensorgehäuse abstehen, wie die Verbindung zwischen Anschlussteil und Flansch benötigt. Die Länge des Flanschs wird daher in der Regel kleiner sein als die Abmessungen (Länge, Breite, Höhe) des Sensorgehäuses. In diesem Sinne kann vorgesehen sein, dass der Anschlussteil das Sensorgehäuse im Betriebszustand mit einem axialen Ende berührt. Dies stellt auch sicher, dass wenig Staub oder Wasser zwischen axialem Ende des Anschlussteils und Sensorgehäuse eindringen kann.

Um die notwendige Starrheit und Stabilität zu gewährleisten, kann vorgesehen sein, dass Sensorgehäuse und Flansch aus Metall gefertigt sind, insbesondere, dass Sensorgehäuse und Flansch einteilig ausgebildet sind. Ebenso wird aus diesem Grund meist auch der Anschlussteil aus Metall gefertigt sein, er könnte jedoch auch aus einem anderen geeigneten Werkstoff gefertigt sein.

Eine einfache genormte Verbindung zwischen Anschlussteil und Flansch des Sensorgehäuses ist eine Schraubverbindung. So kann vorgesehen sein, dass der Flansch ein Außengewinde und der Anschlussteil ein passendes Innengewinde aufweist. Der Flansch muss dann lediglich so lang sein, dass das Außengewinde Platz hat und der Anschlussteil vollständig auf den Flansch aufgeschraubt werden kann.

Der Schutzüberzug kann als Schutzschlauch ausgebildet sein, also einen kreisringförmigen Querschnitt aufweisen. Schutzschläuche weisen in der Regel genormte Größen und Durchmesser auf, für die auch passende genormte Anschlussteile verfügbar sind. Je nach Anwendung kann der Schutzschlauch ein Gummischlauch sein oder ein Wellschlauch aus Kunststoff oder Metall.

Ein Wellschlauch weist eine Elastizität in radialer und längsausdehnender Richtung auf. Diese ist im Wesentlichen bedingt durch das Material, sie kann aber durch die Formgebung der Wellung noch unterstützt werden. Ein Wellschlauch kann - je nach Anwendung - aus einer oder mehreren Schichten bestehen, ist er metallisch ausgeführt, so spricht man auch von einem Metallbalg.

Der Schutzschlauch kann am einfachsten mittels Schlauchschelle, oder einem anderen geeigneten Element, am Anschlussteil befestigt sein, was aufgrund der Starrheit des Anschlussteils auch eine dichte Verbindung darstellt.

Das Sensorgehäuse kann einen Beschleunigungs- oder Kraftsensor enthalten.

Das Sensorgehäuse kann an einem Schienenfahrzeug angebracht sein, etwa an der Radachse, am Fahrwerksrahmen oder auch am Wagenaufbau.

Im Betriebszustand ist vorgesehen, dass ein Sensorkabel durch die Kabelöffnung, den Anschlussteil und den Schutzüberzug, der das Sensorkabel lose umgibt, geführt und der Anschlussteil lösbar mit dem Flansch des Sensorgehäuses verbunden ist.

Durch die erfindungsgemäße Verbindung ist sichergestellt, dass das Sensorkabel durch die Befestigung des Schutzüberzuges nicht beschädigt wird und keine Dichtprobleme zwischen Sensorkabel und Schutzüberzug auftreten. Die einzelnen Komponenten der erfindungsgemäßen Vorrichtung können standardisiert ausgeführt sein, sodass standardisierte Verbindungen zwischen den einzelnen Komponenten möglich sind. Die standardisierte Verbindung zwischen Schutzüberzug und Sensorgehäuse ist unabhängig vom jeweiligen Sensorkabel, sodass innerhalb bestimmter Grenzen für unterschiedliche Sensorkabel auch die gleiche Vorrichtung zum Verbinden verwendet werden kann.

### KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Dabei zeigt:
- Fig. 1: eine Ansicht eines Sensorgehäuses mit Sensorkabel ohne Schutzüberzug,
- Fig. 2: eine Ansicht eines Sensorgehäuses ohne Sensorkabel und ohne Schutzüberzug,
- Fig. 3: eine Ansicht eines Sensorgehäuses mit Anschlussteil,
- Fig. 4: eine Ansicht eines Sensorgehäuses mit Anschlussteil und Schutzüberzug.

### WEGE ZUR AUSFÜHRUNG DER ERFINDUNG

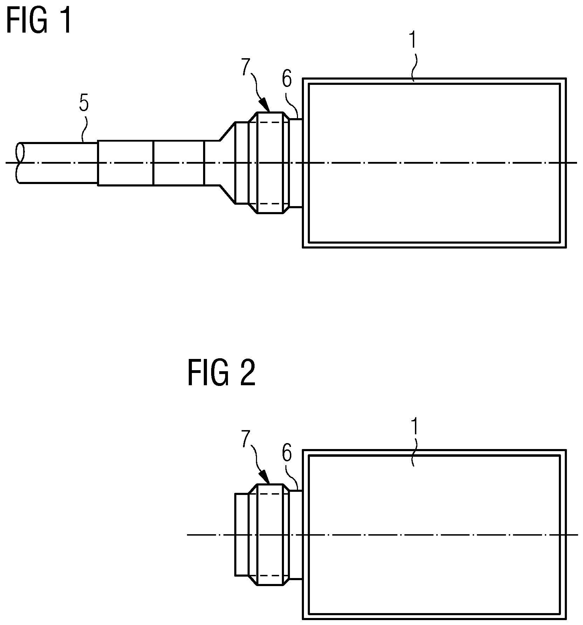

Fig. 1 zeigt ein erfindungsgemäßes Sensorgehäuse 1 mit Sensorkabel 5, bevor ein Schutzüberzug erfindungsgemäß daran befestigt wird. Zu diesem Zweck ist am Sensorgehäuse 1 ein Flansch 6 vorgesehen, der einteilig mit dem Sensorgehäuse 1 (zumindest einteilig mit jener Wand des Sensorgehäuses 1, an welcher der Flansch 6 vorgesehen ist) ausgebildet ist. Am Flansch 6 ist ein Außengewinde 7 vorgesehen. Dieses ist gemäß Normen so ausgeführt, dass ein ebenso genormtes Anschlussstück eines Schutzüberzugs aufgeschraubt werden kann. So kann das Außengewinde 7 etwa gemäß PG9 der DIN 40430 ausgebildet sein, also einen Außendurchmesser von 15,2 mm aufweisen, sodass Sensorkabel 5 mit einem Durchmesser von 4-8 mm durchgeführt werden können.

Das Sensorkabel 5 wird durch den Flansch 6 und durch eine hier nicht sichtbare Kabelöffnung des Sensorgehäuses 1 in das Innere des Sensorgehäuses 1 geführt und mit dem darin befindlichen Sensor verbunden, z.B. über eine Steckverbindung. Das Sensorkabel 5 ist nicht mit dem Flansch 6 oder dem Sensorgehäuse 1 verbunden.

Sowohl das Sensorgehäuse 1 als auch der Flansch 6 mit Außengewinde 7 sind aus Metall, oder einem anderen geeigneten Werkstoff, gefertigt.

Selbstverständlich könnte der Flansch 6 statt dem Außengewinde 7 auch ein Innengewinde aufweisen, und ein Anschlussteil mit passendem Außengewinde in den Flansch 6 eingeschraubt werden.

In Fig. 2 ist das Sensorgehäuse 1 ohne Sensorkabel 5 dargestellt, sodass der Flansch 6 mit Außengewinde 7 besser erkennbar ist.

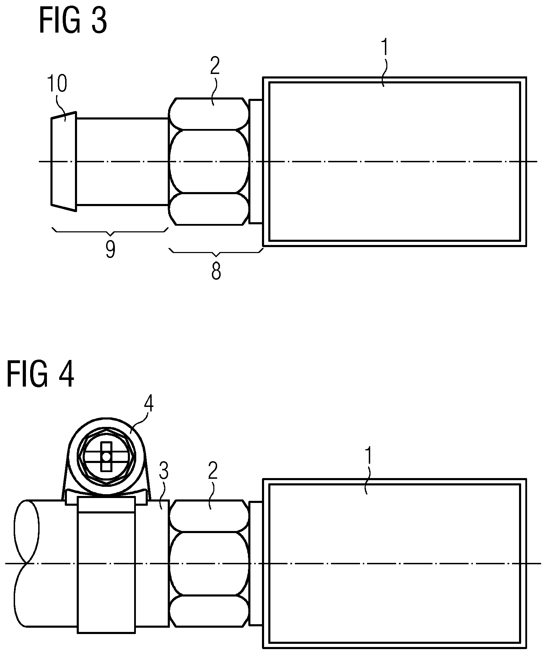

In Fig. 3 ist das Sensorgehäuses mit montiertem Anschlussteil 2 dargestellt. Der hülsenförmige Anschlussteil 2, der ebenfalls aus Metall gefertigt ist, umgibt dabei mit seinem Schraubabschnitt 8 vollständig den Flansch 6 des Sensorgehäuses 1. Der Schraubabschnitt 8 ist mit einem zum Außengewinde 7 korrespondierendem Innengewinde ausgestattet und auf das Außengewinde 7 aufgeschraubt. Dabei ist die axiale Länge des Flansches 6, also von links nach rechts gemessen in Fig. 1 bzw. 2, so bemessen, dass das dem Sensorgehäuse 1 zugewandte Ende eines Standard-Anschlussteils 2 im montierten Zustand möglichst bis zu jener Wand des Sensorgehäuses 1 reicht, die an den Flansch 6 anschließt.

An den Schraubabschnitt 8 schließt sich ein Montageabschnitt 9 an, der einen geringeren Außendurchmesser als der Schraubabschnitt 8 aufweist. Der Montageabschnitt 9 ist so bemessen, dass ein passender Schutzschlauch 3, der auf den Montageabschnitt 9 bis zum Schraubabschnitt 8 aufgeschoben wird, in etwa den gleichen Außendurchmesser aufweist wie der Schraubabschnitt 8. Das Ende des Montageabschnitts 9, der auch das vom Sensorgehäuse 1 abgewandte Ende des Anschlussteils 2 bildet, ist mit einer Umfangserweiterung 10 ausgestattet. Der axiale Abstand der Umfangserweiterung 10 vom Schraubabschnitt 8 ist so bemessen, dass eine Schlauchschelle 4, siehe Fig. 4, die im Montageabschnitt 9 um den Schutzschlauch 3 befestigt wird, in axialer Richtung nicht verrutschen kann.

Fig. 4 zeigt das Sensorgehäuses 1 mit erfindungsgemäß montiertem Anschlussteil 2 und daran montiertem Schutzüberzug, also Schutzschlauch 3. Der Schutzschlauch 3 ist außen formschlüssig auf das Ende des hülsenförmigen Anschlussteils 2 aufgeschoben, also auf den Montageabschnitt 9, siehe Fig. 3. Der Schutzschlauch 3 ist mittels Schlauchschelle 4 am Anschlussteil 2 fest und dicht angebunden. Der Schutzschlauch 3 ist hier als Hydraulikschlauch ausgebildet.

Das Sensorgehäuse 1 ist an einem Schienenfahrzeug im Bereich des Fahrzeugrahmens angebracht, das Sensorkabel 5, das vom Schutzschlauch 3 lose umgeben ist, ist typischer Weise zwischen 25cm und 5m lang.

### Bezugszeichenliste:

- 1: Sensorgehäuse
- 2: Anschlussteil
- 3: Schutzschlauch (Schutzüberzug)
- 4: Schlauchschelle
- 5: Sensorkabel
- 6: Flansch
- 7: Außengewinde
- 8: Schraubabschnitt des Anschlussteils 2
- 9: Montageabschnitt des Anschlussteils 2
- 10: Umfangserweiterung des Montageabschnitts 9

## Patentansprüche

1. Vorrichtung zum Verbinden eines Schutzüberzuges (3) für ein Sensorkabel (5) mit einem Sensorgehäuse (1), umfassend ein Sensorgehäuse (1) mit einer Kabelöffnung für ein Sensorkabel, sowie einen Schutzüberzug (3), der das Sensorkabel im Betriebszustand des Sensors lose umgibt, **dadurch gekennzeichnet, dass** das Sensorgehäuse (1) einen die Kabelöffnung umgebenden Flansch (6) aufweist und ein dem Sensorgehäuse zugewandtes Ende des Schutzüberzuges (3) formschlüssig mit einem starren hülsenförmigen Anschlussteil (2) verbunden ist, welcher Anschlussteil (2) formschlüssig und lösbar mit dem Flansch (6) des Sensorgehäuses (1) verbindbar ist.

2. Vorrichtung nach Anspruch 1, **dadurch gekennzeichnet, dass** der Anschlussteil (2) das Sensorgehäuse (1) im Betriebszustand mit einem axialen Ende berührt.

3. Vorrichtung nach Anspruch 1 oder 2, **dadurch gekennzeichnet, dass** Sensorgehäuse (1) und Flansch (6) aus Metall gefertigt sind.

4. Vorrichtung nach einem der Ansprüche 1 bis 3, **dadurch gekennzeichnet, dass** der Anschlussteil (2) aus Metall gefertigt ist.

5. Vorrichtung nach einem der Ansprüche 1 bis 4, **dadurch gekennzeichnet, dass** der Flansch (6) ein Außengewinde (7) und der Anschlussteil (2) ein passendes Innengewinde aufweist.

6. Vorrichtung nach einem der Ansprüche 1 bis 5, **dadurch gekennzeichnet, dass** der Schutzüberzug (3) als Schutzschlauch ausgebildet ist.

7. Vorrichtung nach Anspruch 6, **dadurch gekennzeichnet, dass** der Schutzschlauch (3) ein Gummischlauch ist.

8. Vorrichtung nach Anspruch 6, **dadurch gekennzeichnet, dass** der Schutzschlauch (3) ein Wellschlauch aus Kunststoff oder Metall ist.

9. Vorrichtung nach einem der Ansprüche 6 bis 8, **dadurch gekennzeichnet, dass** der Schutzschlauch (3) mittels Schlauchschelle (4) am Anschlussteil (2) befestigt ist.

10. Vorrichtung nach einem der Ansprüche 1 bis 9, **dadurch gekennzeichnet, dass** das Sensorgehäuse (1) einen Beschleunigungs- oder Kraftsensor enthält.

11. Vorrichtung nach einem der Ansprüche 1 bis 10, **dadurch gekennzeichnet, dass** das Sensorgehäuse (1) an einem Schienenfahrzeug angebracht ist.

12. Vorrichtung nach einem der Ansprüche 1 bis 11, **dadurch gekennzeichnet, dass** ein Sensorkabel (5) durch die Kabelöffnung, den Anschlussteil (2) und den Schutzüberzug (3), der das Sensorkabel (5) lose umgibt, geführt und der Anschlussteil (2) lösbar mit dem Flansch (6) des Sensorgehäuses (1) verbunden ist.

## Claims

1. Apparatus for connecting a protective cover (3) for a sensor cable (5) to a sensor housing (1), comprising a sensor housing (1) with a cable opening for a sensor cable, as well as a protective cover (3), which surrounds the sensor cable loosely in the operating state of the sensor, **characterised in that** the sensor housing (1) has a flange (6) which surrounds the cable opening and an end of the protective cover (3) facing towards the sensor housing is connected to a rigid sleeve-shaped connector part (2) in a form-fit manner, which connector part (2) is able to be connected to the flange (6) of the sensor housing (1) in a form-fit and releasable manner.

2. Apparatus according to claim 1, **characterised in that** the connector part (2) touches the sensor housing (1) with an axial end in the operating state.

3. Apparatus according to claim 1 or 2, **characterised in that** sensor housing (1) and flange (6) are manufactured from metal.

4. Apparatus according to one of claims 1 to 3, **characterised in that** the connector part (2) is manufactured from metal.

5. Apparatus according to one of claims 1 to 4, **characterised in that** the flange (6) has an external thread (7) and the connector part (2) has a matching internal thread.

6. Apparatus according to one of claims 1 to 5, **characterised in that** the protective cover (3) is embodied as a protective hose.

7. Apparatus according to claim 6, **characterised in that** the protective hose (3) is a rubber hose.

8. Apparatus according to claim 6, **characterised in that** the protective hose (3) is a corrugated hose made of plastic or metal.

9. Apparatus according to one of claims 6 to 8, **characterised in that** the protective hose (3) is fastened to the connector part (2) by hose clip (4).

10. Apparatus according to one of claims 1 to 9, **characterised in that** the sensor housing (1) contains an acceleration or force sensor.

11. Apparatus according to one of claims 1 to 10, **characterised in that** the sensor housing (1) is attached to a rail vehicle.

12. Apparatus according to one of claims 1 to 11, **characterised in that** a sensor cable (5) is guided through the cable opening, the connector part (2) and the protective cover (3), which loosely surrounds the sensor cable (5), and the connector part (2) is connected to the flange (6) of the sensor housing (1) in a releasable manner.

## Revendications

1. Dispositif pour relier une gaine de protection (3) pour un câble de capteur (5) à un boîtier de capteur (1), comprenant un boîtier de capteur (1) comportant un orifice de câble pour un câble de capteur, et une gaine de câble (3) qui entoure de manière lâche le câble de capteur dans un état fonctionnel,
**caractérisé en ce que** le boîtier de capteur (1) comprend une collerette (6) entourant l'orifice de câble et une extrémité de la gaine de protection (3) orientée vers le boîtier de capteur est reliée par complémentarité de forme à une partie de raccord (2) rigide en forme de manchon, laquelle partie de raccord (2) peut être accouplée de manière détachable à la collerette (6) du boîtier de capteur (1).

2. Dispositif selon la revendication 1, **caractérisé en ce que** la partie de raccord (2) est en contact avec le boîtier de capteur (1) dans l'état fonctionnel avec une extrémité axiale.

3. Dispositif selon la revendication 1 ou 2, **caractérisé en ce que** le boîtier de capteur (1) et la collerette (6) sont fabriqués en métal.

4. Dispositif selon l'une des revendications 1 à 3, **caractérisé en ce que** la partie de raccord (2) est fabriquée en métal.

5. Dispositif selon l'une des revendications 1 à 4, **caractérisé en ce que** la collerette (6) comporte un filetage extérieur (7) et la partie de raccord (2) comporte un filetage intérieur correspondant.

6. Dispositif selon l'une des revendications 1 à 5, **caractérisé en ce que** la gaine de protection (3) est conçue sous forme d'un tuyau flexible de protection.

7. Dispositif selon la revendication 6, **caractérisé en ce que** le tuyau flexible de protection (3) est un tuyau flexible en caoutchouc.

8. Dispositif selon la revendication 6, **caractérisé en ce que** le tuyau flexible de protection (3) est un tuyau flexible ondulé constitué de matière plastique ou de métal.

9. Dispositif selon l'une des revendications 6 à 8, **caractérisé en ce que** le tuyau flexible de protection (3) est fixé à la partie de raccord (2) au moyen d'un collier de serrage (4).

10. Dispositif selon l'une des revendications 1 à 9, **caractérisé en ce que** le boîtier de capteur (1) contient un capteur d'accélération ou un capteur de force.

11. Dispositif selon l'une des revendications 1 à 10, **caractérisé en ce que** le boîtier de capteur (1) est monté sur un véhicule ferroviaire.

12. Dispositif selon l'une des revendications 1 à 11, **caractérisé en ce qu'**un câble de capteur (5) est guidé dans l'orifice de câble, la partie de raccord (2), et la gaine de câble (3) qui entoure de manière lâche le câble de capteur (5), et la partie de raccord (2) est accouplée de façon détachable à la collerette (6) du boîtier de capteur (1).
